(19) Europäisches Patentamt
European Patent Office
Office européen des brevets

(11) Publication number: 0 288 254 A2

(12) EUROPEAN PATENT APPLICATION

(21) Application number: 88303541.2

(22) Date of filing: 20.04.88

(51) Int. Cl.4: C08K 5/17 , C08K 5/10 , C08L 59/02

The title of the invention has been amended (Guidelines for Examination in the EPO, A-III, 7.3).

(30) Priority: 22.04.87 JP 99329/87

(43) Date of publication of application: 26.10.88 Bulletin 88/43

(84) Designated Contracting States: AT BE CH DE ES FR GB GR IT LI LU NL SE

(71) Applicant: POLYPLASTICS CO. LTD.
30, Azuchimachi 2-chome
Higashi-ku Osaka-shi Osaka(JP)

(72) Inventor: Nakagawa, Nozumu
885-11, Miyajima Fuji-shi
Shizuoka(JP)
Inventor: Kubota, Masaru
976-5, Hoshiyama§Fujinomiya-shi
Shizuoka(JP)
Inventor: Chino, Shuichi
885-11, Miyajima§Fuji-shi
Shizuoka(JP)

(74) Representative: Jackson, Peter et al
HYDE, HEIDE & O'DONNELL 146 Buckingham Palace Road
London SW1W 9TR(GB)

# (54) Polyoymethylene composition, and method for its manufacture.

(57) A polyoxymethylene composition comprises an antioxidant of 0.05 to 5% by weight and a basic compound containing at least one tertiary nitrogen atom and a metallic salt of carboxylic acid in the same one molecule of 0.01 to 2% by weight based on polyoxymethylene.

EP 0 288 254 A2

# IMPROVED POLYOXYMETHYLENE COMPOSITE AND METHOD OF MANUFACTURING SAME

The present invention relates to a polyoxymethylene composite improved in heat-resistance, discoloration and adhesion to a metallic mold during the molding.

(Prior Art and Problems to be Solved)

Polyoxymethylene resins are polymerized from formaldehyde or cyclic oligomers thereof, that is, trioxane, or copolymerized from trioxane and comonomers, such as cyclic ethers and cyclic formals, and their ends are subjected to a stabilizing treatment. In addition, antioxidants and other heat stabilizers are added to them to prevent them from decomposing.

Stereo-hindered phenol compounds or stereo-hindered amine compounds have been proposed as the antioxidants added to the polyoxymethylene resins and polyamides, urea derivatives, hydrazine compounds, amidine compounds, hydroxides of alkaline metals or alkaline earth metals, salts of organic or inorganic acids and the like as the other heat stabilizers. However, a polyoxymethylene resin composite with these compounds incorporated therein has defects in that it is changed to a yellowish brown color under the action of heat and oxygen within a cylinder of a molding machine and in that the compounds produce deposits (known as MD) of fine particular substances and tarry substances which adhere to a surface of a metallic mold and produce a loss of surface luster on the resultant molded products after prolonged use of the mold. Accordingly, various kinds of device and proposals of overcome these defects have been made but a satisfactory result has not always been obtained.

(Measures for Solving the Problems)

The present inventors discovered from their repeated detail investigations about stabilizers that the use of the following group of compounds together with antioxidants exhibit a remarkable effect for the heat-resistance, discoloration and formation of substances stuck to a metallic mold(MD) and as a result, achieved the present invention.

That is to say, the present invention relates to a polyoxymethylene composite comprising an antioxidant at a ratio of 0.05 to 5% by weight and a basic compound containing a tertiary nitrogen atom and a metallic salt of carboxylic acid in the same one molecule at a ratio of 0.01 to 2% by weight based on the polyoxymethylene. The invention also provides a method of manufacturing the polyoxymethylene composite, characterized in that said substances are added to polyoxymethylene and the resulting mixture is heated to melting.

The basic compound used in the present invention is a compound containing at least one tertiary nitrogen atom and a metallic salt of carboxylic acid in the same one molecule and represented by the following formula(1). It is preferable that all nitrogen atoms are a tertiary nitrogen atom.

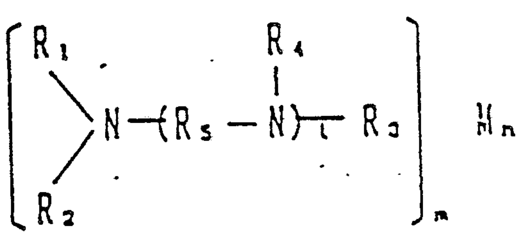

--- (1)

wherein at least One of $R_1$, $R_2$,$R_3$, $R_4$ is a carboxylic group represented by the following formula (2) and the rest are an alkyl group having 1 to 7 carbon atoms, $R_5$ is an alkylene group having 2 to 10 carbon atoms or an alkylene group having 1 to 3 ether bonds midway, M is at least one kind of alkaline metals or alkaline earth metals, L is an integer of 0 to 6, m is 1 or 2, n is an integer making a total of valences of metals M equal to a total of carboxylic groups in said compound.

$$-R_6-\overset{O}{\overset{\|}{C}}-O- \quad --- (2)$$

wherein $R_6$ is an alkylene group having 1 to 6 carbon atoms and immediately connected to a nitrogen atom in the formula (1).

This basic compound is for example a salt formed of at least one kind selected from the group consisting of N, N-dimethyl-glycine, N-methylimino-diacetic acid, nitrilo-triacetic acid, nitrilo-propionic acid, ethylene diamine tetraacetic acid, ethylene diamine tetrapropionic acid, diethylene triamine pentaacetic acid, triethylene tetramine hexaacetic acid, triethylene tetramine hexapropyonic acid, cyclohexylene dinitrilo-tetraacetic acid, cyclohexylene dinitrilo-tetrapropyonic acid and ethylene dioxy-bis (ethylamine)-N, N, N', N'-tetraacetic acid and at least one kind selected from the group consisting of lithium, sodium, potassium, rubidium, cesium, beryllium, magnesium, calcium, strontium and barium at a stoichiometric ratio. Of them, salts formed of carboxylic acid, such as N-methylimino-diacetic acid, nitrilo-triacetic acid, ethylene diamine tetraacetic acid and ethylene diamine tetrapropionic acid, and an alkaline metal, such as lithium and sodium, or an alkaline earth metal, such as magnesium and calcium, are preferably used. In particular, salts formed of a carboxylic acid represented by the formula (1), in which all of $R_1$, $R_2$, $R_3$, $R_4$ are a carboxylic group, and an alkaline metal are greatly effective. Particularly, ethylene diamine tetraacetic acid tetrasodium [the following formula (3)] is most superior.

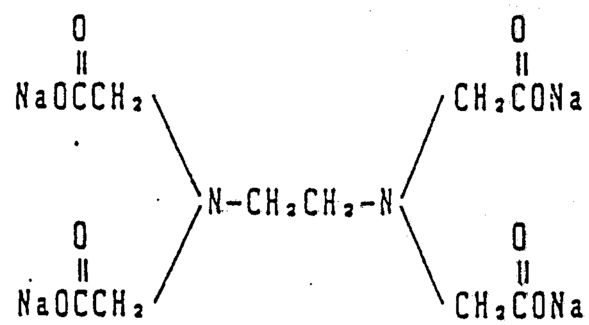

--- (3)

These basic stabilisers control the thermal decomposition of a composite containing polyoxymethylene together with antioxidants but do not lead to the formation of colored material in the composite. Moreover the basic stabilisers have little tendency to sublime or decompose. Accordingly the generation of gaseous decomposition products can be substantially prevented during molding of the composite, such that little or no formation of MD occurs.

An antioxidant used in the present invention includes hindered phenols/and hindered amines. The hindered phenols include 2, 2'-methylene-bis (4-methyl-6-t-butylphenol), hexamethylene glycol-bis(3, 5-di-t-butyl-4-hydroxyhydrocinnamate), tetrakis [methylene(3, 5-di-t-butyl-4-hydroxy-hydrocinnamate)] methane, triethylene glycol-bis-3-(3-t-butyl-4-hydroxy-5-methylphenyl)propyonate, 1,3,5-trimethyl-2,4,6-tris(3,5-di-t-butyl-4-hydroxy-benzyl)benzene, n-octadecyl-3-(4-hydroxy-3, 5-di-t-butylphenol) propyonate, 4, 4'-methylene-bis(2, 6-di-t-butylphenol), 4, 4'-butylidene-bis-(6-t-butyl-3-methyl-phenol), 2, 2'-thiodiethyl-bis-[3-(3,5-di-t-butyl-4-hydroxyphenyl)propyonate], di-stearyl-3, 5-di-t-butyl-4-hydroxybenzyl-phosphonate and 2-t-butyl-6-(3-t-butyl-5-methyl-2-hydroxybenzyl)-4-methylphenylacrylate used singly or in combination. Of them, hexamethylene glycol-bis(3, 5-di-t-butyl-4-hydroxyhydrocinnamate), tetrakis[methylene(3, 5-di-t-butyl-4-hydroxyhydro-cinnamate)]methane and triethylene glycol-bis-3-(3-t-butyl-4-hydroxy-5-methylphenyl)-propyonate are particularly preferable substances.

In addition, the hindered amines are pyperidine derivatives having a stereo-hindering group which include 4-acetoxy-2, 2, 6, 6-tetramethylpyperidine, 4-stearoyloxy-2, 2, 6, 6-tetramethylpyperidine, 4-acryloyloxy-2, 2, 6, 6-tetramethylpyperidine, 4-methoxy-2, 2, 6, 6-tetramethylpyperidine, 4-benzoyloxy-2, 2, 6, 6-tetramethylpyperidine, 4-cyclohexyloxy-2, 2, 6, 6-tetramethylpyperidine, 4-phenoxy-2, 2, 6, 6-tetramethylpyperidine, 4-benzyloxy-2, 2, 6, 6-tetramethylpyperidine, 4-(phenylcarbamoyloxy)-2, 2, 6, 6-tetramethylpyperidine, bis(2, 2, 6, 6-tetramethyl-4-pyperidyl)oxalate, bis(2, 2, 6, 6-tetramethyl-4-pyperizyl)-maronate, bis(2, 2, 6, 6-tetramethyl-4-pyperizyl)adipate, bis(2, 2, 6, 6-tetramethyl-4-pyperidyl)cebacate, bis-(1, 2, 2, 6, 6-pentamethyl-pyperidyl)cebacate, bis(2, 2, 6, 6-tetramethyl-4-pyperizyl)terephthalate, 1, 2-bis(2, 2, 6, 6-tetramethyl-4-pyperidyloxy)ethane, bis(2, 2, 6, 6-tetramethyl-4-pyperizyl)hexamethylene-1, 6-dicarbamate, bis(1-methyl-2, 2, 6, 6-tetramethyl-4-pyperidyl)adipate, tris(2, 2, 6, 6-tetramethyl-4-pyperidyl)-benzene-1, 3, 5-tricarboxylate and the like.

Also high molecular pyperidine derivatives are preferably used.

The antioxidant used in the present invention is added to polyoxymethylene at a ratio of 0.05 to 5% by weight, preferably 0.1 to 3% by weight, and the basic compound is added to polyoxymethylene at a ratio of 0.01 to 2% by weight, preferably 0.03 to 1% by weight. In the case where these substances are added at a too little ratio, a sufficient effect can not be attained while in the case where they are added at a too large ratio, the effects, such as heat-resistance, can not be improved in spite of a large amount of them and rather a tendency of discoloring occurs, which is not preferable.

A method of adding and blending said compounds is not specially limited. The usual methods can be used. That is to say, the antioxidant and the above described basic compound is added to polyoxymethylene, of which ends were subjected to the stabilizing treatment, at a ratio of 0.05 to 5% by weight and 0.01 to 2% by weight, respectively, and the resulting mixture is molten and blended to obtain the composite. Furthermore, the above described basic compound is added to crude polyoxymethylene, of which stability is insufficient, together with the antioxidant without subjecting the ends of crude polyoxymethylene after stopping the polymerization of polyxoymethylene and the resulting mixture may be molten and blended in a uniaxial or biaxial extruder or the similar apparatus (disclosed in for example Japanese Patent Publication No. Sho 50-21514)provided with a vent hole under the condition that a temperature is 180 to 250°C and a mean stay is 1 minute or more.

The basic compound according to the present invention is added in the form of powder but it may be added in the form of a 0.1 to 10%-aqueous solution.

According to the present invention, such the basic compound serves not only as a stabilizer but also as a modifier for releasing unstabilized end portions from unstable crude polyoxymethylene to turn the unstable polymer to a stabilized polymer.

The polyoxymethylene composite obtained by these methods can be used as a molding material as they are but known substances added to usual thermoplastic resins and thermo-setting resins, that is to say, also plasticizers, ultraviolet ray absorbants, antistatic agents, surfactants, flame-retardants, coloring agents, such as dyestuffs and pigments, unguents for improving the fluidity and releasability, lubricants, crystallization promotors (nucleus agents) and the like can be suitably used according to uses and requirements. In addition, fibrous, plate-like and granular inorganic fillers, such as glass fibers, can be added to the composite of the present invention according to the object. It goes without saying also that other resins or high molecular substances can be supplementarily added to the composite of the present invention.

(Preferred Embodiments)

The present invention is below described with reference to the Examples and Comparative Examples.

E (%) designates a quantity of unstable end portions, which are decomposed by alkalies, and is represented by the following equation:

$$E = [(W_0 - W)/W_0] \times 100\ (\%)$$

In the above described equation, $W_0$ designates a weight (about 5 g) of dry polyxoymethylene used in the measurement and W designates a weight of polyoxymethylene obtained by heating said dry polyoxymethylene in a 1 weight %-aqueous solution of ammonia of 500 ml for 30 minutes at 180°C and then cooled followed by washing and drying the deposited polyoxymethylene.

In addition, the color tone of the composite was evaluated by staying a sample of about 10 g within a melt-indexer for 60 minutes at 200°C and then measuring the color tone of the sample when molded in the form of a disc by means of a colorimeter. The evaluation is classified as shown in the following Table. A L-value represents the whiteness. The larger value of L is preferable. In addition, a b-value represents the yellowness. The smaller value of b is preferable.

| Rank | |
|---|---|
| A | L-value: 86 or more; b-value: less than 1.0 |
| B | L-value: 85 or more; b-value: less than 3.0 |
| C | L-value: 82 or more; b-value: less than 6.0 |
| D | L-value: less than 82; b-value: 6.0 or more |

The heat-stability was evaluated by subjecting the sample to the heat treatment in the same manner as in the measurement of color tone and measuring the melt index (MI) value before and after the treatment. That is to say, the lower MI value after the stay means that the thermal decomposition is reduced and the heat-resistance is superior.

The adhesion to a metallic mold during the molding was evaluated by visually observing the stain of the metallic mold after the continuous molding of the polyoxymethylene composite sample under appointed conditions in an injection molding machine. The evaluation is represented by A, B, C which are defined as follows:

A - - - Not stained
B - - - Slightly stained
C - - - Stained

Examples 1, 2

An antioxidant [triethylene glycol-bis-3-(3-t-butyl-4-hydroxy-5-methylphenyl)propyonate] of 0.5 parts by weight and a basic compound shown in Table 1 of 0.1 parts by weight were added to polyoxymethylene copolymer, which has MI-value of 9.0 and E of 1.0% and of which ends were subjected to the stabilizing treatment, of 100 parts by weight and the resulting mixture was molten and blended at 210°C in the extruder to obtain pellets. The test results of the resulting composite are shown in Table 1.

Comparative Examples 1, 2

Pellets were obtained in the same manner as in Examples 1, 2 excepting that the substances shown in Table 1 were added in place of the basic compounds shown in Examples 1, 2 at the ratio of 0.1% by weight. The test results of the resulting composite are shown in Table 1 together with those in Examples 1, 2.

Examples 3, 4

Antioxidants used in Examples 1, 2 and basic compounds shown in Table 2 in the form of a 5 weight %-aqueous solution were added to polyoxymethylene copolymer, which has MI-value of 8.6 and E of 2.5% and of which ends were not subjected to the stabilizing treatment, at a ratio of 0.5% by weight and 0.15% by weight and the resulting mixture was molten and blended at 210°C and a pressure of a vent hole of 200 torr (26.6 $KN/m^2$) in a biaxial extruder provided with a vent hole to obtain pellets. The test results of the resulting composite are shown in Table 2.

Comparative Examples 3, 4

The treatment was carried out in the same manner as in Examples 3, 4 excepting that the basic compounds added in Examples were not added and the substances shown in Table 2 were added at a ratio of 0.15% by weight in the form of a 5%-aqueous solution to obtain pellets. The test results of the resulting composite are shown in Table 2 together with those in Examples 3, 4.

Examples 5 to 8

Antioxidants added in Examples 1, 2 and basic compounds shown in Table 3 were added to polyoxymethylene copolymer, which has MI-value of 8.6 and E of 2.5% and of which ends are not subjected to the stabilizing treatment, at a ratio of 0.7% by weight and 0.1% by weight, respectively, and the resulting mixture was molten and stirred for 15 minutes in a laboplastmil mixer with maintaining a suction pressure at 50 torr (6.65 KN/$m^2$). The test results of the resulting composite are shown in Table 3.

Comparative Examples 5 to 8

The treatment was carried out in the same manner as in Examples 5 to 8 excepting that the substances shown in Table 3 was added at a ratio of 0.1% by weight in place of the basic stabilizers added in Examples 5 to 8. The test results of the resulting composite are shown in Table 3 together with those in Examples 5 to 8.

Table 1

| | | Additive (basic compound) | Color tone | MI | MD |
|---|---|---|---|---|---|
| Example | 1 | Ethylenediamine tetraacetic acid tetrasodium | A | 10.4 | A |
| | 2 | Nitrilo-triacetic acid trisodium | A | 12.7 | A |
| Comparative Example | 1 | Calcium starate | D | 16.0 | C |
| | 2 | Polyamide* | C | 12.8 | B |

* Nylon 6, 66, 610 copolymer

Table 2

| | | Additive (basic compound) | Color tone | MI | MD | E (%) |
|---|---|---|---|---|---|---|
| Example | 3 | Ethylene diamine tetraacetic acid tetrasodium | A | 10.4 | A | 0.8 |
| | 4 | Triethylene tetramine hexaacetic acid hexasodium | A | 10.7 | A | 0.3 |
| Comparative Example | 3 | Triethylamine | C | 16.1 | C | 0.7 |
| | 4 | — | A | 16.6 | C | 1.6 |

Table 3

| | | Additive (basic compound) | Color tone | MI | MD | E (%) |
|---|---|---|---|---|---|---|
| Example | 5 | Ethylene diamine tetraacetic acid tetrasodium | A | 10.3 | A | 1.0 |
| | 6 | Nitrilo-triacetic acid trisodium | A | 12.8 | A | 0.9 |
| | 7 | N-methylimino-diacetic acid disodium | A | 11.8 | B | 1.0 |
| | 8 | Triethylene tetramine hexaacetic acid hexasodium | B | 10.9 | A | 0.3 |
| Comparative Example | 5 | Imino-diacetic acid disodium | C | 10.8 | A | 0.3 |
| | 6 | Magnesium hydroxide | B | 13.8 | C | 1.1 |
| | 7 | Sodium carbonate | D | 10.3 | C | 0.3 |
| | 8 | — | A | 16.6 | C | 2.1 |

As obvious from the above description and Examples, according to the present invention, polyoxymethylene can be remarkably improved in heat-stability, the stain of the metallic mold is reduced after a long-range continuous molding, the discoloration does not occur even after the high-temperature treatment in the molding, and the superior color tone can be maintained, whereby obtaining a polyoxymethylene resin composite superior in quality.

## Claims

1. A polyoxymethylene composite comprising an antioxidant of 0.05 to 5% by weight and a basic compound containing at least one tertiary nitrogen atom and a metallic salt of carboxylic acid in the same one molecule of 0.01 to 2% by weight based on polyoxymethylene.

2. A polyoxyethylene composite as set forth in Claim 1, in which the basic compound is a compound represented by the following formula (1):

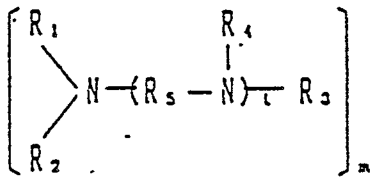

--- (1)

wherein at least one of $R_1$, $R_2$, $R_3$, $R_4$ is a carboxylic group represented by the following formula (2) and the rest are an alkyl group having 1 to 7 carbon atoms, $R_5$ is an alkylene group having 2 to 10 carbon atoms or an alkylene group having 1 to 3 ether bonds midway, M is at least one kind of alkali metals or alkaline earth metals, L is an integer of 0 to 6, m is 1 or 2, n is an integer making a total of valences of metals M equal to a total of carboxylic groups in said compound.

$$-R_6\overset{\overset{O}{\|}}{C}-O- \quad \text{--- (2)}$$

wherein $R_6$ is an alkylene group having 1 to 6 carbon atoms and immediately connected to a nitrogen atom in the formula (1).

3. A polyoxymethylene composite as set forth in Claim 1 or Claim 2, in which the basic compound is one or more salts, each formed of a stoichiometoic ratio of a carboxylic acid selected from the group consisting of N-methylimino-diacetic acid, nitrilo-triacetic acid, ethylene diamine tetraacetic acid, ethylene diamine tetrapropyonic acid, triethylene tetramine hexaacetic acid and ethylene dioxy-bis(ethylamine)-N, N, N′, N′-tetraacetic acid and an alkali or alkaline earth metal selected from the group consisting of lithium, sodium, magnesium and calcium.

4. A polyoxymethylene composite as set forth in claim 3, in which the basic compound is the tetrasodium salt of ethylene diamine tetraacetic acid.

5. A polyoxymethylene composite as set forth in any preceding claims, in which the antioxidant is selected from hindered phenols and/or hindered amines.

6. A polyoxymethylene composite as set forth in claim 5, in which the antioxidant is selected from one or more of hexamethylene glycol-bis (3,5-di-t-butyl-4-hydroxyhydrocinnamate, tetrakis [methylene (3,5-di-t-butyl-4-hydroxyhydocinnamate)] methane and triethylene glycol-bis-3-(3-t-butyl-4 hydroxy-5-methyl phenyl) propyonate.

7. A polyoxyethylene composite as set forth in any preceding claim, in which the quantity of antioxidant is 0.1 to 3% by weight.

8. A polyoxymethylene composite as set forth in any preceding claim, in which the quantity of basic compound is 0.03 to 1% by weight.

9. A method of manufacturing a polyoxymethylene composite as claimed in any preceding claim, characterised in that the antioxidant and basic compound are added to crude polyoxymethylene and the resulting mixture is heated to melting.

10. A method as claimed in claim 9 of manufacturing a polyoxymethylene composite, in which the mixture is melted and blended in an extruder or similar apparatus at a temperature of 180 to 250°C for a period of 1 minute or more.